# EUROPEAN PATENT APPLICATION

(11) **EP 4 424 773 A1**
(43) Date of publication of application: **04.09.2024**
(21) Application number: 22886790.9
(22) Date of filing: 18.10.2022
(51) Int. Cl.: C08L 71/02, C08K 3/34, C08K 7/00, C08L 33/04, C09K 23/54

(54) **EMULSION COMPOSITION AND PRODUCTION METHOD THEREFOR**

(30) Priority: 28.10.2021 JP 2021176711
(71) Applicant: Kaneka Corporation, Osaka-shi, Osaka 530-8288 (JP)
(72) Inventor: ZHANG, Dong, Takasago-shi, Hyogo 676-8688 (JP); OKAI, Jiro, Takasago-shi, Hyogo 676-8688 (JP); ANDO, Hiroshi, Tokyo 107-6028 (JP)
(74) Representative: Vossius & Partner Patentanwälte Rechtsanwälte mbB
(86) International application number: PCT/JP2022/038710
(87) International publication number: WO 2023/074462

(57) **Abstract**

An object is to provide (i) an emulsion composition which makes it possible to easily form an emulsion containing a hydrolyzable silyl group-containing polymer and (ii) a method for producing the emulsion composition. The object is attained by providing an emulsion composition containing: (A) at least one of a hydrolyzable silyl group-containing polyoxyalkylene-based polymer (A1) and a hydrolyzable silyl group-containing (meth)acrylic ester-based copolymer (A2); (B) water; and (C) a layered filler. The emulsion composition contains 1.5 parts by weight to 20 parts by weight of the (C) component with respect to a total of 100 parts by weight of the (A) component and the (B) component.

## Description

### Technical Field

The present invention relates to an emulsion composition containing a hydrolyzable silyl group-containing polymer and a method for producing the emulsion composition.

### Background Art

As a technique of emulsifying a hydrolyzable silyl group-containing polymer, Patent Literature 1, for example, discloses a silylated polymer emulsion containing a silylated polymer, water, nano silica, and any emulsifying agent.

Patent Literature 2 discloses a reactive emulsion that is obtained by dispersing, in water with use of a surfactant, polyether or polyester each of which has at least one reactive silicon group at a side chain or a terminal in one molecule.

### Citation List

### [Patent Literature]

[Patent Literature 1]
   Japanese Patent Application Publication Tokukai No. 2009-520867
[Patent Literature 2]
   Japanese Patent Application Publication Tokukaisho No. 59-006219

### Summary of Invention

### Technical Problem

However, in a conventional technique as disclosed in Patent Literatures 1 and 2 etc., it is necessary to carry out, for example, high-speed dispersion. Thus, the conventional technique has room for improvement, from the viewpoint of simplification of a production step.

Thus, an object of the present invention is to provide (i) an emulsion composition which makes it possible to easily form an emulsion containing a hydrolyzable silyl group-containing polymer and (ii) a method for producing the emulsion composition.

### Solution to Problem

As a result of conducting diligent studies on a means that could attain the above object, the inventors of the present invention found, for the first time, that, by adding a layered filler to an emulsion composition containing a specific hydrolyzable silyl group-containing polymer, the emulsion composition which made it possible to easily form an emulsion containing the hydrolyzable silyl group-containing polymer was obtained. The inventors of the present invention thus completed the present invention.

Therefore, an aspect of the present invention is an emulsion composition (hereinafter referred to as "present emulsion composition") containing: (A) at least one of a hydrolyzable silyl group-containing polyoxyalkylene-based polymer (A1) and a hydrolyzable silyl group-containing (meth)acrylic ester-based copolymer (A2); (B) water; and (C) a layered filler, wherein the emulsion composition comprises 1.5 parts by weight to 20 parts by weight of the (C) component with respect to a total of 100 parts by weight of the (A) component and the (B) component.

Further, an aspect of the present invention is a method for producing an emulsion composition (hereinafter referred to as "present production method"), including a stirring step of mixing and stirring: (A) at least one of a hydrolyzable silyl group-containing polyoxyalkylene-based polymer (A1) and a hydrolyzable silyl group-containing (meth)acrylic ester-based copolymer (A2); (B) water; and (C) a layered filler, wherein 1.5 parts by weight to 20 parts by weight of the (C) component is mixed and stirred with a total of 100 parts by weight of the (A) component and the (B) component.

### Advantageous Effects of Invention

According to an aspect of the present invention, it is possible to provide an emulsion composition which makes it possible to easily form an emulsion containing a hydrolyzable silyl group-containing polymer.

### Description of Embodiments

The following description will discuss embodiments of the present invention in detail. Unless otherwise specified herein, a numerical range expressed as "A to B" means "not less than A and not more than B." All documents listed herein are incorporated herein by reference.

### [1. Outline of the present invention]

Conventionally, for example, a technique of mixing and emulsifying a hydrolyzable silyl group-containing polymer, a surfactant, and water is known as a technique of emulsifying the hydrolyzable silyl group-containing polymer (for example, Patent Literatures 1 and 2).

In the process in which the inventors of the present invention conducted studies, it was not considered easy to produce an aqueous emulsion containing a hydrolyzable silyl group-containing polymer because a condensation reaction of a hydrolyzable silyl group in the hydrolyzable silyl group-containing polymer progressed due to the presence of water.

As a result of conducting diligent studies on a means that could attain the above object, the inventors of the present invention succeeded in obtaining findings that, by adding a layered filler when an aqueous emulsion containing a specific hydrolyzable silyl group-containing polymer was produced, it was possible to easily form the emulsion containing the hydrolyzable silyl group-containing polymer.

A technique of thus easily producing an emulsion containing a hydrolyzable silyl group-containing polymer was conventionally not known, and is extremely useful in the fields in which an emulsion containing a hydrolyzable silyl group-containing polymer is used.

As described above, with a configuration in accordance with an aspect of the present invention, an aqueous emulsion containing a hydrolyzable silyl group-containing polymer is easily obtained. Thus, the present invention can contribute to, for example, attaining the sustainable development goals (SDGs) such as Goal 12 "Ensure sustainable consumption and production patterns" and Goal 11 "Make cities inclusive, safe, resilient and sustainable". The following description will discuss a configuration of the present emulsion composition in detail.

### [2. Emulsion composition]

As described above, the present emulsion composition contains: (A) at least one of a hydrolyzable silyl group-containing polyoxyalkylene-based polymer (A1) and a hydrolyzable silyl group-containing (meth)acrylic ester-based copolymer (A2); (B) water; and (C) a layered filler.

Note that, hereinafter, the "hydrolyzable silyl group-containing polyoxyalkylene-based polymer (A1)", the "hydrolyzable silyl group-containing (meth)acrylic ester-based copolymer (A2)", the "(B) water", and the "(C) layered filler" may be referred to as "(A1) component", "(A2) component", "(B) component", and "(C) component", respectively. Note also that the "hydrolyzable silyl group-containing polyoxyalkylene-based polymer (A1)" and the "hydrolyzable silyl group-containing (meth)acrylic ester-based copolymer (A2)" may be collectively referred to "(A) component".

### (2-1. (A) component)

The present emulsion composition contains, as the (A) component, at least one of the hydrolyzable silyl group-containing polyoxyalkylene-based polymer (A1) and the hydrolyzable silyl group-containing (meth)acrylic ester-based copolymer (A2).

In an embodiment of the present invention, the (A) component may be the hydrolyzable silyl group-containing polyoxyalkylene-based polymer (A1), the hydrolyzable silyl group-containing (meth)acrylic ester-based copolymer (A2), or the hydrolyzable silyl group-containing polyoxyalkylene-based polymer (A1) and the hydrolyzable silyl group-containing (meth)acrylic ester-based copolymer (A2).

### <Hydrolyzable silyl group-containing polyoxyalkylene-based polymer (A1)>

The hydrolyzable silyl group-containing polyoxyalkylene-based polymer (A1) is a compound in which a polymer part (also referred to as "main chain") of a hydrolyzable silyl group-containing polymer is polyoxyalkylene. The hydrolyzable silyl group-containing polyoxyalkylene-based polymer (A1) forms a siloxane bond between molecules and forms a crosslinked product under a specific condition known to a person skilled in the art.

In an embodiment of the present invention, the lower limit of the number average molecular weight (Mn) of the (A) component is preferably not less than 1,000, more preferably not less than 3,000, even more preferably not less than 5,000, and most preferably not less than 10,000. The upper limit of the number average molecular weight of the (A) component is preferably not more than 100,000, more preferably not more than 50,000, and even more preferably not more than 30,000. In a case where the number average molecular weight falls within the above range, an aqueous dispersion of the polymer is easily prepared.

In an embodiment of the present invention, a ratio between the weight average molecular weight (Mw) of the (A) component and the number average molecular weight (Mn) of the (A) component (Mw/Mn; molecular weight distribution) is preferably not more than 1.6, more preferably not more than 1.5, even more preferably not more than 1.4, particularly preferably not more than 1.3, and peculiarly preferably not more than 1.2. In a case where the molecular weight distribution falls within the above range, the polymer has a low viscosity, and an aqueous dispersion of the polymer is easily prepared.

In this specification, the weight average molecular weight (Mw) and the number average molecular weight (Mn) are values measured by gel permeation chromatography (GPC) in terms of standard polystyrene.

The molecular weight of the (A) component can be expressed by a terminal group equivalent molecular weight. The terminal group equivalent molecular weight is found as follows. That is, a polymer precursor into which no hydrolyzable silyl group has been introduced is subjected to a titrimetric analysis based on the respective principles of (i) a hydroxy value measurement method defined in JIS K 1557 and (ii) an iodine value measurement method defined in JIS K 0070 so as to directly measure a terminal group concentration. Then, in consideration of a structure (branching degree determined in accordance with a polymerization initiator used) of the polymer, the terminal group equivalent molecular weight is found. The terminal group equivalent molecular weight of the polymer (A) can also be obtained as follows. That is, calibration curves of the number average molecular weight (Mn), obtained by general GPC measurement, and the terminal group equivalent molecular weight of the polymer precursor are created. Then, the number average molecular weight (Mn), obtained by GPC, of the hydrolyzable silyl group-containing polymer is converted into the terminal group equivalent molecular weight.

### [Hydrolyzable silyl group]

The structure of a hydrolyzable silyl group contained in the (A1) component is not limited in particular. A hydrolyzable silyl group generally used in the present technical field may be used.

In an embodiment of the present invention, the hydrolyzable silyl group of the (A1) component is represented by a general formula (1) below. Two or more types of hydrolyzable silyl groups represented by the general formula (1) may be contained in one polymer molecule. -

Si(R¹)₃₋ₐ(X)ₐ (1)

In the formula, R¹ represents a substituted or unsubstituted hydrocarbon group having 1 to 20 carbon atoms (in a case where the hydrocarbon group is substituted, the hydrocarbon group may be substituted with a hetero atom-containing group). In a case where two or more R¹ are present in one hydrolyzable silyl group, the two or more R¹ may be identical to or different from each other. Examples of R¹ include alkyl groups having 1 to 20 carbon atoms, aryl groups having 6 to 20 carbon atoms, and aralkyl groups having 7 to 20 carbon atoms.

X represents a hydroxy group or a hydrolyzable group. Examples of the hydrolyzable group include hydroxy groups, halogens, alkoxy groups, acyloxy groups, ketoxymate groups, amino groups, amide groups, acid amide groups, aminooxy groups, mercapto groups, and alkenyloxy groups. Among these groups, the alkoxy groups such as methoxy groups and ethoxy groups are more preferable, the methoxy groups and the ethoxy groups are even more preferable, and the methoxy groups are particularly preferable, because these groups have gentle hydrolyzability and are easy to handle.

"a" is 1, 2, or 3. "a" is preferably 2 or 3 that causes condensation by which a network structure is formed and a cured product is obtained.

In general, alkoxy groups having fewer carbon atoms are more reactive. That is, reactivity decreases in order of methoxy groups, ethoxy groups, and propoxy groups. This property can be used to determine, as appropriate, a specific structure of the hydrolyzable silyl group, depending on a method for producing the (A1) component and an application of the (A1) component.

Specific examples of the hydrolyzable silyl group include trimethoxysilyl groups, triethoxysilyl groups, triisopropoxysilyl groups, dimethoxymethylsilyl groups, diethoxymethylsilyl groups, diisopropoxymethylsilyl groups, (chloromethyl)dimethoxysilyl groups, and (methoxymethyl)dimethoxysilyl groups.

In consideration of the physical properties of the cured product to be obtained and availability and ease of handling of raw material compounds, the hydrolyzable silyl group is preferably a dialkoxysilyl group or a trialkoxysilyl group. In consideration of a high crosslinking reaction speed, the trialkoxysilyl group is preferable. Among the above-listed specific examples, one or more selected from the trimethoxysilyl groups, the triethoxysilyl groups, and the triisopropoxysilyl groups are preferable, and the trimethoxysilyl group is more preferable.

The lower limit of the number of hydrolyzable silyl groups contained in one polymer molecule is preferably not less than 0.5, more preferably not less than 1.0, and even more preferably not less than 1.5. The upper limit of the number of hydrolyzable silyl groups contained in one polymer molecule is preferably not more than 5.0, more preferably not more than 4.0, and even more preferably not more than 3.0. In a case where the number of hydrolyzable silyl groups falls within the above range, sufficient plasticity is imparted to the cured product to be obtained by a condensation reaction of the silyl groups.

The hydrolyzable silyl group may be distributed randomly or in a block manner. The hydrolyzable silyl group may be distributed at any position in a polymer molecule. Preferably, such a distribution position of the hydrolyzable silyl group includes a terminal or a vicinity of the terminal of the polymer molecule. More preferably, the distribution position of the hydrolyzable silyl group is localized at the terminal or in the vicinity of the terminal of the polymer molecule. In an embodiment of the present invention, the "vicinity of the terminal of the polymer molecule" indicates a region from each terminal of the polymer molecule to a position P in the polymer molecule. The weight of the region accounts for not more than 20% by weight, not more than 15% by weight, or not more than 10% by weight of the total weight of the polymer molecule. In an embodiment of the present invention, the phrase "localized at the terminal or in the vicinity of the terminal of the polymer molecule" indicates that the number of hydrolyzable silyl groups located at the terminal or the vicinity of the terminal accounts for not less than 70%, not less than 80%, or not less than 90% of the number of hydrolyzable silyl groups contained in the polymer molecule.

A method for introducing the hydrolyzable silyl group into a polyoxyalkylene-based polymer may be a known method.

### [Polyoxyalkylene]

A polyoxyalkylene structure in the (A1) component may be linear or branched. Preferably, the polyoxyalkylene structure is a structure derived from polyoxypropylene diol or polyoxypropylene triol.

A polyoxyalkylene-based polymer molecule may be constituted by only one type of repeating unit or may contain two or more types of repeating units. One type of polyoxyalkylene-based polymer may be contained or two or more types of polyoxyalkylene-based polymers may be contained.

Examples of a main chain structure of the polyoxyalkylene-based polymer include a structure which has a repeating unit represented by the following general formula (3). In the formula, R² is a bivalent alkylene group.

-R²-O- (2)

The structure represented by the general formula (2) accounts for preferably not less than 50% by weight, more preferably not less than 70% by weight, and even more preferably not less than 90% by weight of the total weight of the polyoxyalkylene-based polymer in the (A1) component.

A specific structure of R² contained in the general formula (2) is not particularly limited. R² is preferably an alkylene group having 1 to 14 carbon atoms, and more preferably a linear or branched alkylene group having 2 to 4 carbon atoms.

Specific examples of the repeating unit represented by the general formula (2) include: -CH₂O-, -CH₂CH₂O-, - CH₂CH(CH₃)O-, -CH₂CH(C₂H₅)O-, -CH₂C(CH₃)₂O-, and - CH₂CH₂CH₂CH₂O-. Among these repeating units, - CH₂CH(CH₃)O- is preferable. In a case where the polyoxyalkylene-based polymer includes -CH₂CH(CH₃)O- in the repeating unit, a glass transition temperature (Tg) of the polyoxyalkylene-based polymer is easily adjusted to not higher than 0°C.

The polyoxyalkylene-based polymer may contain a urethane bond or a urea bond in the main chain structure.

As the polyoxyalkylene-based polymer, a commercially available product can also be used. Examples of the commercially available product include: Kaneka MS Polymer (registered trademark) S810, S257, S327, S203H, and S303H (each available from KANEKA CORPORATION); Silyl (registered trademark) SAX220, SAT350, SAT400, SAX510, SAX520, SAX580, SAX590, and SAX750 (each available from KANEKA CORPORATION); Excestar (registered trademark) ES-S2410, ES-S2420, and ES-S3630 (each available from AGC Inc.); and GENIOSIL (registered trademark) STP-E10, STP-E15, STP-E-30, and STP-E-35 (each available from Wacker).

### (Method for producing polyoxyalkylene-based polymer)

As a method for producing the hydrolyzable silyl group-containing polyoxyalkylene-based polymer (A1), the following methods (I) to (III) can be used;
(I) a method in which (i) a hydroxy group-terminated polyoxyalkylene-based polymer is obtained by a method in which a double metal cyanide complex catalyst is used to polymerize an epoxy compound with a hydroxy group-containing initiator, (ii) thereafter a hydroxy group of the hydroxy group-terminated polyoxyalkylene-based polymer thus obtained is converted into a carbon-carbon unsaturated group, and then (iii) a silane compound is added to the obtained polymer by a hydrosilylation reaction;
(II) a method in which (i) a hydroxy group-terminated polyoxyalkylene-based polymer is obtained by a method in which a double metal cyanide complex catalyst is used to polymerize an epoxy compound with a hydroxy group-containing initiator, and then (ii) the hydroxy group-terminated polyoxyalkylene-based polymer thus obtained is reacted with a compound having both a hydrolyzable silyl group and a group that is reactive with a hydroxy group; and
(III) a method in which (i) an isocyanate group-terminated polymer is obtained by reacting a hydroxy group-terminated polyoxyalkylene-based polymer and an excessive polyisocyanate compound, and then (ii) a compound having both a hydrolyzable silyl group and a group that is reactive with an isocyanate group is reacted with the isocyanate group-terminated polymer.

The hydroxy group-containing initiator used in each of the methods (I) and (II) includes initiators each having one or more hydroxy groups, such as ethylene glycol, propylene glycol, glycerin, pentaerythritol, polypropylene glycol having a low molecular weight, polyoxypropylene triol, allyl alcohol, methanol, ethanol, propanol, butanol, pentanol, hexanol, a polypropylene monoallyl ether, and a polypropylene monoalkyl ether.

The epoxy compound used in each of the methods (I) and (II) includes: alkylene oxides such as ethylene oxide and propylene oxide; and glycidyl ethers such as methyl glycidyl ether and allyl glycidyl ether. Among these compounds, the propylene oxide is preferable.

The carbon-carbon unsaturated group used in the method (I) include vinyl groups, allyl groups, methallyl groups, and propargyl group. Among these groups, the allyl groups are preferable.

A method for converting the hydroxy group into the carbon-carbon unsaturated group in (I) is preferably a method in which (i) an alkali metal salt is caused to act on the hydroxy group-terminated polymer, and then (ii) the polymer is reacted with a halogenated hydrocarbon compound having a carbon-carbon unsaturated bond.

The halogenated hydrocarbon compound used in the method (I) include vinyl chlorides, allyl chlorides, methallyl chlorides, propargyl chlorides, vinyl bromides, allyl bromides, methallyl bromides, propargyl bromides, vinyl iodides, allyl iodides, methallyl iodides, and propargyl iodides.

The hydrosilane compound used in the method (I) can be trimethoxysilane, triethoxysilane, tris(2-propenyloxy) silane, triacetoxy silane, dimethoxymethylsilane, (chloromethyl)dimethoxysilane, (methoxymethyl)dimethoxysilane, (N,N-diethylaminomethyl)dimethoxysilane, or the like.

The hydrosilylation reaction used in the method (I) is accelerated by various catalysts. A hydrosilylation catalyst may be a known catalyst. For example, the hydrosilylation catalyst can be any of the following: a catalyst obtained by causing platinum to be supported on a carrier such as alumina, silica, carbon black, or the like; chloroplatinic acid; a chloroplatinic acid complex composed of a chloroplatinic acid and alcohol, aldehyde, ketone, or the like; a platinum-olefin complex [for example, Pt(CH₂=CH₂)₂(PPh₃), Pt(CH₂=CH₂)₂Cl₂]; a platinum-vinylsiloxane complex [Pt{(vinyl)Me₂SiOSiMe₂(vinyl)}, Pt{Me(vinyl) SiO}₄]; a platinum-phosphine complex [Ph(PPh₃)₄, Pt(PBu₃)₄]; a platinum-phosphite complex [Pt{P(OPh)₃}₄]; and the like.

The compound which has both a hydrolyzable silyl group and a group that is reactive with a hydroxy group and which can be used in the method (II) can be, for example, any of the following: isocyanate silanes such as 3-isocyanate propyltrimethoxysilane, 3-isocyanate propyldimethoxymethylsilane, 3-isocyanate propyltriethoxysilane, isocyanate methyltrimethoxysilane, isocyanate methyltriethoxysilane, and isocyanate methyldimethoxymethylsilane; mercaptosilanes such as 3-mercaptopropyltrimethoxysilane, 3-mercaptopropyldimethoxymethylsilane, and 3-mercaptopropyltriethoxysilane; and epoxysilanes such as 3-glycidoxypropyltrimethoxysilane, 3-glycidoxypropyldimethoxymethylsilane, and 3-glycidoxypropyltriethoxysilane.

The polyisocyanate compound which can be used in the method (III) include: aromatic polyisocyanates such as toluene (tolylene) diisocyanate, diphenylmethane diisocyanate, and xylylene diisocyanate; and aliphatic polyisocyanates such as isophorone diisocyanate and hexamethylene diisocyanate.

The compound which has both a hydrolyzable silyl group and a group that is reactive with an isocyanate group and which can be used in the method (III) include: amino group-containing silanes such as γ-aminopropyltrimethoxysilane, γ-aminopropyldimethoxymethylsilane, γ-aminopropyltriethoxysilane, N-(β-aminoethyl)-γ-amino propyltrimethoxysilane, N-(β-aminoethyl)-γ-aminopropyldimethoxymethylsilane, N-(β-aminoethyl)-γ-aminopropyltriethoxysilane, γ-(N-phenyl)aminopropyltrimethoxysilane, γ-(N-phenyl)aminopropyldimethoxymethylsilane, N-ethylaminoisobutyltrimethoxysilane, N-ethylaminoisobutyldimethoxymethylsilane, N-cyclohexylaminomethyltrimethoxysilane, and N-cyclohexylaminomethyldimethoxy methyl silane; hydroxy group-containing silanes such as γ-hydroxypropyltrimethoxysilane and γ-hydroxypropyldimethoxymethylsilane; and mercapto group-containing silanes such as γ-mercaptopropyltrimethoxysilane and γ-mercaptopropyldimethoxymethylsilane.

As the hydrolyzable silyl group-containing polyoxyalkylene-based polymer (A1), a polyoxyalkylene-based polymer having a plurality of hydrolyzable silyl groups at one terminal can also be used. The polyoxyalkylene-based polymer having a plurality of hydrolyzable silyl groups at one terminal is synthesized as follows: (i) a hydroxy group-terminated polyoxyalkylene-based polymer is obtained by a method in which a double metal cyanide complex catalyst is used to polymerize an epoxy compound with a hydroxy group-containing initiator; (ii) a polyoxyalkylene-based polymer having a plurality of carbon-carbon unsaturated groups at one terminal is obtained by causing an alkali metal salt to act on a hydroxy group of the obtained hydroxy group-terminated polyoxyalkylene-based polymer, subsequently reacting the polymer with allyl glycidyl ether, further causing an alkali metal salt to act on a hydroxy group terminal thus produced, and then reacting the polymer with a halogenated hydrocarbon compound having a carbon-carbon unsaturated bond; and (iii) a silane compound is added, by a hydrosilylation reaction, to the obtained polyoxyalkylene-based polymer having a plurality of carbon-carbon unsaturated groups at one terminal.

### <Hydrolyzable silyl group-containing (meth)acrylic ester-based copolymer (A2)>

The hydrolyzable silyl group-containing (meth)acrylic ester-based copolymer (A2) is a compound in which a polymer part of a hydrolyzable silyl group-containing polymer is a (meth)acrylic ester-based copolymer. The hydrolyzable silyl group-containing (meth)acrylic ester-based copolymer (A2) forms a siloxane bond between molecules and forms a crosslinked product under a specific condition known to a person skilled in the art.

### [Hydrolyzable silyl group]

To a hydrolyzable silyl group in the hydrolyzable silyl group-containing (meth)acrylic ester-based copolymer (A2), the description in the section [Hydrolyzable silyl group] of the above <Hydrolyzable silyl group-containing polyoxyalkylene-based polymer (A1)> is applied.

### [(Meth)acrylic ester]

A (meth)acrylic ester contains a structural unit derived from a (meth)acrylic monomer. In this specification, the "(meth)acrylic" refers to acrylic and/or methacrylic.

A (meth)acrylic ester structure in the (A2) component may be linear or branched.

A (meth)acrylic ester molecule may be constituted by only one type of repeating unit or may contain two or more types of repeating units. One type of (meth)acrylic ester may be contained or two or more types of (meth)acrylic esters may be contained.

Examples of the (meth)acrylic ester structure include a structure represented by the following general formula (3). In the formula, R³ is a hydrogen atom or a methyl group, and R⁴ is a group having one or more carbon atoms. The number of the carbon atoms in R⁴ can be, for example, 1 to 22. R⁴ can be an alkyl group, a cycloalkyl group, or an aryl group. R⁴ may be substituted with a halogen, a hydroxy group, an alkoxy group, an amino group, or the like.

-CH(R³)-CH(COOR⁴)- (3)

The structure represented by the general formula (3) is obtained by polymerization of a (meth)acrylic monomer. Specific examples of the (meth)acrylic monomer include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, octyl (meth)acrylate, 2-methoxyethyl (meth)acrylate, 3-methoxybutyl (meth)acrylate, 2-ethoxyethyl (meth)acrylate, 2-butoxyethyl (meth)acrylate, isopropoxyethyl (meth)acrylate, phenyl (meth)acrylate, tolyl (meth)acrylate, benzyl (meth)acrylate, 2-hydroxyethyl (meth)acrylate, 2-hydroxypropyl (meth)acrylate, 2,2,2-trifluoroethyl (meth)acrylate, glycidyl (meth)acrylate, 1-ethylcyclopentylether (meth)acrylate, dimethylaminoethyl (meth)acrylate, nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, stearyl (meth)acrylate, icosyl (meth)acrylate, docosyl (meth)acrylate, lauryl (meth)acrylate, stearyl (meth)acrylate, oleyl (meth)acrylate, linoleyl (meth)acrylate, isobornyl (meth)acrylate, 2-aminoethyl (meth)acrylate, γ-(methacryloyloxypropyl)trimethoxysilane, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutyl ethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate.

Among the above-listed (meth)acrylic monomers, one or more selected from ethyl acrylate, n-propyl acrylate, n-butyl acrylate, 2-ethylhexyl acrylate, 2-ethylhexyl methacrylate, and stearyl acrylate are preferable. A main chain structure constituted by any of these monomers allows the glass transition temperature (Tg) to be easily adjusted to not higher than 0°C.

As the (meth)acrylic ester, a commercially available product can also be used. Examples of the commercially available product include: XMAP (registered trademark) SA100S, SA110S, SA120S, SA310S, and SA410S (each available from KANEKA CORPORATION); ARUFON (registered trademark) US-6100, US-6110, US-6120, US-6130, US-6140, US-6150, US-6170, US-6180, and US-6190 (each available from TOAGOSEI CO., LTD.); ACTFLOW NE-1000 (registered trademark) (available from SOKEN CHEMICAL 8s ENGINEERING CO., LTD.); and Joncryl (registered trademark) (available from BASF).

In an embodiment of the present invention, the (meth)acrylic ester preferably contains an XY diblock structure or an XYX triblock structure in the molecule. Note, here, that an X block is a block in which the hydrolyzable silyl group is contained in a relatively large amount. Note also that a Y block is a block in which the hydrolyzable silyl group is contained in a relatively small amount. Note that the entire molecular structure of the (meth)acrylic ester is not particularly limited, provided that the (meth)acrylic ester contains the XY diblock structure or the XYX triblock structure. For example, an XYXY tetrablock structure may be employed. Note, here, that the "XYX triblock structure" means a structure called "ABA triblock structure" among persons skilled in the art.

The number of repeating units which are derived from a hydrolyzable silyl group-containing monomer and which are contained in the X block is, on average, more than 1.0, preferably 1.5 or more, and more preferably 1.7 or more. Furthermore, the amount of the repeating units which are derived from a hydrolyzable silyl group-containing monomer and which are contained in the X block is preferably more than 3% by weight, more preferably not less than 4.5% by weight, and even more preferably not less than 5% by weight, with respect to the weight of all repeating units contained in the X block.

In an embodiment of the present invention, the (meth)acrylic ester is an XYX triblock polymer, and blocks (X blocks) constituting terminal parts of the (meth)acrylic ester each preferably have more than one hydrolyzable silyl group.

The amount of repeating units which are derived from a hydrolyzable silyl group-containing monomer and which are contained in the Y block is 0% by weight to 3% by weight, preferably 0% by weight to 2% by weight, and more preferably 0% by weight to 1% by weight, with respect to the weight of all repeating units contained in the Y block.

In the (meth)acrylic ester containing the XY diblock structure or the XYX triblock structure in the molecule, the repeating units derived from a hydrolyzable silyl group-containing monomer are localized in a region(s) at a terminal(s) or in a vicinity /vicinities of the terminal(s) (one terminal or both terminals).

### (Method for producing (meth)acrylic ester)

The (meth)acrylic ester can be produced by a known polymerization method (such as a radical polymerization method, a cation polymerization method, or an anion polymerization method).

A preferable method for producing the hydrolyzable silyl group-containing (meth)acrylic ester-based copolymer (A2) can be any of the following methods (i) to (iii):
(i) a method in which a compound having a polymerizable unsaturated group and a hydrolyzable silyl group is copolymerized with a monomer having a (meth)acrylic structure;
(ii) a method in which, in the presence of a compound which has a hydrolyzable silyl group and a mercapto group and which is a chain transfer agent, a monomer having a (meth)acrylic structure is copolymerized; and
(iii) a method in which, after a monomer having a (meth)acrylic structure is copolymerized by a living radical polymerization method, a hydrolyzable silyl group is introduced into a molecular chain terminal.

The living polymerization method in (iii) is preferable, because it is possible to introduce a functional group to a terminal of a polymer molecule, and possible to synthesize a (meth)acrylic ester having a small molecular weight distribution.

The compound which has a polymerizable unsaturated group and a hydrolyzable silyl group and which is used in (i) include 3-(dimethoxymethylsilyl)propyl (meth)acrylate, (dimethoxymethylsilyl)methyl (meth)acrylate, (diethoxymethylsilyl)methyl (meth)acrylate, and 3-((methoxymethyl)dimethoxysilyl)propyl (meth) acrylate.

The compound which has a hydrolyzable silyl group and a mercapto group and which is used in (ii) include 3-mercaptopropyldimethoxymethylsilane and (mercaptomethyl)dimethoxymethylsilane.

Examples of the living polymerization method in (iii) include a living radical polymerization method, a living cationic polymerization method, and a living anionic polymerization method. Among these polymerization methods, the living radical polymerization method is suitable for production of the (meth)acrylic ester. Examples of the living radical polymerization method include the following methods.
· Atom transfer radical polymerization (ATRP) (see J. Am. Chem. Soc. 1995, 117, 5614; Macromolecules. 1995, 28, 1721)
· Single electron transfer polymerization (SET-LRP) (see J. Am. Chem. Soc. 2006, 128, 14156; JPSChem 2007, 45, 1607)
· Reversible chain transfer catalyzed polymerization (RTCP) (see "Living Radical Polymerizations with Organic Catalysts", "KOBUNSHI RONBUNSHU (Japanese Journal of Polymer Science and Technology)" 68, 223-231 (2011); Japanese Patent Application Publication, Tokukai, No. 2014-111798))
· Reversible addition/fragmentation chain transfer polymerization method (RAFT polymerization)
· Nitroxy radical method (NMP method)
· Polymerization method using an organotellurium compound (TERP method)
- Polymerization method using an organoantimony compound (SBRP method)
. Polymerization method using an organobismuth compound (BIRP)
· Iodine transfer polymerization method

Examples of a method for introducing the hydrolyzable silyl group to the (meth)acrylic ester include a method disclosed in Japanese Patent Application Publication Tokukai No. 2007-302749 and a method disclosed in Japanese Patent Application Publication Tokukai No. 2018-162394. In the method disclosed in Japanese Patent Application Publication Tokukai No. 2007-302749, the hydrolyzable silyl group is introduced by converting a functional group at the terminal of the (meth)acrylic ester. Specifically, the hydrolyzable silyl group is introduced by converting a molecular terminal of the (meth)acrylic ester into a hydroxy group, into an alkenyl group, and then into the hydrolyzable silyl group in this order. In the method disclosed in Japanese Patent Application Publication Tokukai No. 2018-162394, the hydrolyzable silyl group is introduced by copolymerization with a hydrolyzable silyl group-containing (meth)acrylic ester monomer. Specifically, the hydrolyzable silyl group is introduced to the terminal or the vicinity of the terminal of the (meth)acrylic ester molecule by controlling, in accordance with a progress stage of living polymerization, the amount of the hydrolyzable silyl group-containing (meth)acrylic ester monomer to be introduced. A hydrolyzable silyl group-containing (meth)acrylic ester obtained by any of these methods has the hydrolyzable silyl group locally at a terminal of a molecule or in the vicinity of the terminal.

The upper limit of the glass transition temperature (Tg) of the (meth)acrylic ester in the (A2) component is preferably not higher than 100°C, more preferably not higher than 50°C, even more preferably not higher than 0°C, and most preferably not higher than -10°C. The lower limit of the glass transition temperature (Tg) of the (meth)acrylic ester is not limited in particular, but is preferably not lower than -80°C and more preferably not lower than -70°C. The glass transition temperature of the (meth)acrylic ester is substantially regarded as the glass transition temperature of the (A2) component itself.

### (2-2. (B) component)

The present emulsion composition contains water as the (B) component. The water functions as a solvent which cooperates with the (C) component to dissolve the (A) component and form an emulsion.

The weight ratio between the (A) component and the (B) component in the present emulsion composition is preferably 20:80 to 80:20, more preferably 30:70 to 70:30, and even more preferably 60:40 to 40:60. In a case where the weight ratio between the (A) component and the (B) component in the present emulsion composition is 20:80 to 80:20, an effect is brought about that an obtained emulsion is stable.

### (2-3. (C) component)

The present emulsion composition contains a layered filler as the (C) component. By the present emulsion composition containing the (C) component, it is possible for the hydrolyzable silyl group-containing polymer and the water to form a stable emulsion, and possible to easily form an emulsion containing the hydrolyzable silyl group-containing polymer.

The layered filler is not limited in particular, provided that the effect of the present invention is bought about. Examples of the layered filler include a multi-layered phyllosilicate mineral (also referred to as "layered silicate") in which a plurality of two-dimensionally spreading layers are laminated; vermiculite; halloysite; swelling mica; graphite. From the viewpoint of the stability of the emulsion, the layered silicate is preferable. One type of layered filler may be used or two or more types of layered fillers may be used in combination.

The layered filler is preferably hydrophilic so as to form the emulsion composition.

Examples of the layered silicate include smectites. The smectites indicate montmorillonite minerals, for example, montmorillonite, magnesian montmorillonite, iron montmorillonite, iron magnesian montmorillonite, beidellite, aluminian beidellite, nontronite, aluminian nontronite, saponite, aluminian saponite, hectorite, sauconite, stevensite, and bentonite.

The layered filler can be, for example, a commercially available product. Examples of the commercially available product of the layered filler include, as natural products of the layered filler, Kunipia series (montmorillonite, for example, Kunipia-G4, available from KUNIMINE INDUSTRIES CO., LTD.), BEN-GEL series (bentonite, available from HOJUN CO., LTD.), and SOMASIF ME series (swelling mica, available from CO-OP CHEMICAL CO., LTD.). Examples of the commercially available product of the layered filler include, as synthesized products of the layered filler, Sumecton (saponite, for example, Sumecton SWF, Sumecton SWN, available from KUNIMINE INDUSTRIES CO., LTD.), KUNIGEL MB (available from KUNIMINE INDUSTRIES CO., LTD.), and LUCENTITE SWN series (hectorite, available from CO-OP CHEMICAL CO., LTD.)

The layered filler has, as a primary particle diameter, a size of, for example, not less than 100 nm, preferably not less than 150 nm, and even more preferably not less than 200 nm. The upper limit of the size of the layered filler as a primary particle diameter is, for example, not more than 20 µm and preferably not more than 15 µm. In a case where the size of the layered filler falls within the range of not less than 100 nm and not more than 20 pm, it is possible to more effectively delay a condensation reaction of the hydrolyzable silyl group in the hydrolyzable silyl group-containing polymer due to the presence of water.

The amount of the (C) component contained in the present emulsion composition is 1.5 parts by weight to 20 parts by weight, preferably 1.6 parts by weight to 19 parts by weight, more preferably 1.7 parts by weight to 18 parts by weight, and even more preferably 1.8 parts by weight to 17 parts by weight, with respect to a total of 100 parts by weight of the (A) component and the (B) component. In a case where the amount of the (C) component contained in the present emulsion composition is 1.5 parts by weight to 20 parts by weight, a uniform emulsion is obtained. Note that, in a case where the amount of the (C) component is excessively large (in a case where the amount of the (C) component exceeds 20 parts by weight), stirring may be difficult and the emulsion composition may not be easily obtained.

### (2-4. Another component)

The emulsion composition may contain a component other than the above-described components, as appropriate, depending on the purpose. Examples of such a component include a condensation catalyst that cures the (A) component, a filler other than the (C) component, an antioxidant, a photo stabilizer, an ultraviolet absorbent, a water-soluble resin, a solvent, a plasticizer, a defoaming agent, a leveling agent, a dispersing agent, a film foaming aid, a coupling agent, a coloring agent, a water resistant agent, a cold resistant agent, a waterproofing agent, an antirust agent, a setting modifier, a lubricant, a pH regulator, a preservative, an inorganic pigment, an organic pigment, a surfactant, a crosslinking agent, an epoxy-based compound, a polyvalent metal compound, an isocyanate-based compound, glass fibers, and chemical fibers.

### (3. Method for producing emulsion composition)

In an embodiment of the present invention, provided is a method for producing the emulsion composition, including a stirring step of mixing and stirring: (A) at least one of the hydrolyzable silyl group-containing polyoxyalkylene-based polymer (A1) and the hydrolyzable silyl group-containing (meth)acrylic ester-based copolymer (A2); (B) the water; and (C) the layered filler, wherein 1.5 parts by weight to 20 parts by weight of the (C) component is mixed and stirred with a total of 100 parts by weight of the (A) component and the (B) component. In the present production method, since the (C) layered filler is included, it is possible to produce the emulsion composition which makes it possible to form an emulsion containing the hydrolyzable silyl group-containing polymer.

In a case where another component as described above is added to the present emulsion composition, another component and the (A), (B), and (C) components may be simultaneously added and mixed with each other, or another component may be mixed with an emulsion after the emulsion is produced by mixing the (A), (B), and (C) components.

In the present production method, a method for mixing and stirring the (A) component, the (B) component, and the (C) component is not limited in particular, and mixing and stirring are carried out by any method used in the present technical field. For example, as described in Examples, the (A) component, the (B) component, and the (C) component may be simultaneously mixed and stirred. Alternatively, after any two of the components are mixed and stirred first, the remaining one may be added and then mixing and stirring may be carried out. A device for mixing and stirring is also not limited in particular. For example, a mixer, a mechanical stirrer, a homogenizer, an ultrasonic homogenizer, or the like is used.

In an embodiment of the present invention, the rotation speed of a stirring device in the stirring step is preferably 200 rpm to 1800 rpm, more preferably 250 rpm to 1600 rpm, and even more preferably 300 rpm to 1400 rpm. In the present production method, it is possible to produce the emulsion composition which makes it possible to form an emulsion containing the hydrolyzable silyl group-containing polymer, while keeping the rotation speed lower (without the necessity for high-speed dispersion) than in the conventional technique.

In an embodiment of the present invention, a stirring time in the stirring step is preferably 1 minute to 60 minutes, more preferably 2 minutes to 50 minutes, and even more preferably 3 minutes to 40 minutes. In the present production method, it is possible to produce the emulsion composition which makes it possible to form an emulsion containing the hydrolyzable silyl group-containing polymer, by stirring for a shorter time than in the conventional technique.

In an embodiment of the present invention, a stirring temperature in the stirring step is preferably 5°C to 80°C, more preferably a 10°C to 60°C, and even more preferably a 15°C to 50°C. In the present production method, it is possible to produce the emulsion composition which makes it possible to form an emulsion containing the hydrolyzable silyl group-containing polymer, at a lower stirring temperature than in the conventional technique.

In the present production method, the descriptions in the above section [2. Emulsion composition] are applied to the "(A) component", the "(B) component", and the "(C) component".

### [4. Applications of emulsion composition]

The emulsion of the present invention can be used for, for example, paints, inks, mold releases, adhesive agents, adhesives, sealing materials, coating materials, cosmetics, and the like.

The present invention is not limited to the embodiments, but can be altered by a skilled person in the art within the scope of the claims. The present invention also encompasses, in its technical scope, any embodiment derived by combining technical means disclosed in differing embodiments.

That is, an aspect of the present invention includes the following.
<1> An emulsion composition including:
   (A) at least one of a hydrolyzable silyl group-containing polyoxyalkylene-based polymer (A1) and a hydrolyzable silyl group-containing (meth)acrylic ester-based copolymer (A2);
   (B) water; and
   (C) a layered filler, wherein
   the emulsion composition comprises 1.5 parts by weight to 20 parts by weight of the (C) component with respect to a total of 100 parts by weight of the (A) component and the (B) component.
<2> The emulsion composition described in <1>, wherein the (C) component is a layered silicate.
<3> The emulsion composition described in <1> or <2>, wherein a weight ratio between the (A) component and the (B) component is 20:80 to 80:20.
<4> The emulsion composition described in any one of <1> to <3>, wherein the (A) component is the hydrolyzable silyl group-containing polyoxyalkylene-based polymer (A1).
<5> A method for producing an emulsion composition, including a stirring step of mixing and stirring:
   (A) at least one of a hydrolyzable silyl group-containing polyoxyalkylene-based polymer (A1) and a hydrolyzable silyl group-containing (meth)acrylic ester-based copolymer (A2);
   (B) water; and
   (C) a layered filler, wherein 1.5 parts by weight to 20 parts by weight of the (C) component is mixed and stirred with a total of 100 parts by weight of the (A) component and the (B) component.
<6> The method described in <5>, wherein, in the stirring step, a rotation speed of a stirring device is 200 rpm to 1800 rpm, and a stirring time is 1 minute to 60 minutes.
<7> The method described in <5> or <6>, wherein, in the stirring step, a stirring temperature is 5°C to 80°C.
<8> The method described in any one of <5> to <7>, wherein the (C) component is a layered silicate.
<9> The method described in any one of <5> to <8>, wherein a weight ratio between the (A) component and the (B) component is 20:80 to 80:20.
<10> The method described in any one of <5> to <9>, wherein the (A) component is the hydrolyzable silyl group-containing polyoxyalkylene-based polymer (A1).

### Examples

The following description will discuss the present invention in more detail on the basis of Examples. Note, however, that the present invention is not limited to Examples.

### [Materials]

Materials used in Examples and Comparative Examples are as follows.
<(A) component>
   A hydrolyzable silyl group-containing polyoxyalkylene-based polymer (A1) ((A-1) to (A-5) in Synthesis Examples) or a hydrolyzable silyl group-containing (meth)acrylic ester-based copolymer (A2) ((A-6) in Synthesis Example), each of which was produced on the basis of Synthesis Examples below, was used.
<(B) components
   Water
<(C) component>
   Sumecton SWF (layered silicate, primary particle diameter: 100 nm to 1000 nm, available from KUNIMINE INDUSTRIES CO., LTD.)
   Sumecton SWN (layered silicate, primary particle diameter: 100 nm to 1000 nm, available from KUNIMINE INDUSTRIES CO., LTD.)
   Kunipia-G4 (layered silicate, primary particle diameter: 100 nm to 1000 nm, available from KUNIMINE INDUSTRIES CO., LTD.)
   KUNIGEL MB (layered silicate, primary particle diameter: 100 nm to 1000 nm, available from KUNIMINE INDUSTRIES CO., LTD.)

### <Other fillers>

FTL-100 (needle-shaped titanium oxide, primary particle diameter: 1.7 µm in major axis and 0.1 µm in minor axis, available from ISHIHARA SANGYO KAISHA, LTD.)
WHISCAL A (needle-shaped calcium carbonate, primary particles diameter: 20 µm to 30 µm in major axis and 0.5 µm to 1.0 µm in minor axis, available from Maruo Calcium Co., Ltd.)

### [Measurement method and evaluation method]

In Examples and Comparative Examples, measurement and evaluation were carried out by the following methods.

### (Number average molecular weight)

Number average molecular weights in Examples (Synthesis Examples) are GPC molecular weights measured under the following conditions.
- Solution sending system: HLC-8220GPC available from Tosoh Corporation
- Column: TSKgel SuperH series available from Tosoh Corporation
- Solvent: THF
- Molecular weight: in terms of polystyrene
- Measurement temperature: 40°C

The average number of hydrolyzable silyl groups per terminal structure and the average number of hydrolyzable silyl groups per molecule of a polymer shown in each of Examples (Synthetic Examples) were calculated by the structure of the polymer and NMR measurement results. A molecular weight per silyl group was obtained from a GPC molecular weight and the average number of hydrolyzable silyl groups per molecule.

### (Emulsion state)

A mixture obtained in each of Examples and Comparative Examples described below was visually observed. In a case where it was possible to emulsify the mixture uniformly, evaluation was made as "Good". In a case where it was not possible to emulsify the mixture and the mixture was separated, evaluation was made as "Poor".

### [Synthesis Example 1]

A synthesis example of the polymer (A-1) is shown below.

Propylene oxide was polymerized with use of (i) polyoxypropylene triol which was an initiator and which had a number average molecular weight of approximately 4,500 and (ii) a zinc hexacyanocobaltate glyme complex catalyst. Thus obtained was polyoxypropylene which had hydroxy groups at terminals and which had a number average molecular weight of 16,400 and a molecular weight distribution of Mw/Mn=1.31. Subsequently, 1.2 molar equivalents of sodium methoxide with respect to the hydroxy groups of the obtained hydroxy group-terminated polyoxypropylene was added as a 28% methanol solution. The methanol was then removed by vacuum devolatilization. Thereafter, 1.5 molar equivalents of allyl chloride with respect to the hydroxy groups of the hydroxy group-terminated polyoxypropylene was further added to convert the hydroxy groups at the terminals to allyl groups. Then, unreacted allyl chloride was removed by devolatilization under reduced pressure. The obtained unpurified polyoxypropylene was mixed with n-hexane and water, and stirring was carried out. The water was then removed by centrifugal separation. The hexane was devolatilized from the obtained hexane solution under reduced pressure to remove a metal salt in the polymer. In this manner, the polyoxypropylene having the allyl groups at the terminals was obtained. To 500 g of this polymer, 50 pl of a platinum-divinyldisiloxane complex solution (3% by weight of isopropanol solution in terms of platinum) was added. While the obtained solution was stirred, 10.9 g of trimethoxysilane was slowly dropped into the solution. After a 2-hour reaction at 100°C, unreacted trimethoxysilane was distilled off under reduced pressure. Thus obtained was polyoxypropylene (A-1) which had trimethoxysilyl groups at terminals and which had a number average molecular weight of approximately 16,400. It was found that the polymer (A-1) had 0.7 trimethoxysilyl groups on average at one terminal and 2.2 trimethoxysilyl groups on average in one molecule.

### [Synthesis Example 2]

A synthesis example of the polymer (A-2) is shown below.

Propylene oxide was polymerized with use of (i) polyoxypropylene triol which was an initiator and which had a number average molecular weight of approximately 4,500 and (ii) a zinc hexacyanocobaltate glyme complex catalyst. Thus obtained was polyoxypropylene which had hydroxy groups at terminals and which had a number average molecular weight of 24,600 and a molecular weight distribution of Mw/Mn=1.31. Subsequently, 1.2 molar equivalents of sodium methoxide with respect to the hydroxy groups of the obtained hydroxy group-terminated polyoxypropylene was added as a 28% methanol solution. The methanol was then removed by vacuum devolatilization. Thereafter, 1.5 molar equivalents of allyl chloride with respect to the hydroxy groups of the hydroxy group-terminated polyoxypropylene was added to convert the hydroxy groups at the terminals to allyl groups. The obtained unpurified polyoxypropylene was mixed with n-hexane and water, and stirring was carried out. The water was then removed by centrifugal separation. The hexane was devolatilized from the obtained hexane solution under reduced pressure to remove a metal salt in the polymer. In this manner, the polyoxypropylene having the allyl groups at the terminals was obtained. To 500 g of this polymer, 50 µl of a platinum-divinyldisiloxane complex solution (3% by weight of isopropanol solution in terms of platinum) was added. While the obtained solution was stirred, 6.9 g of trimethoxysilane was slowly dropped into the solution. After the mixed solution was reacted at 90°C for 2 hours, unreacted trimethoxysilane was distilled off under reduced pressure. Thus obtained was polyoxypropylene (A-2) which had trimethoxysilyl groups and which had a number average molecular weight of 26,200. It was found that the polymer (A-2) had 0.7 trimethoxysilyl groups on average at one terminal and 2.1 trimethoxysilyl groups on average in one molecule.

### [Synthesis Example 3]

A synthesis example of the polymer (A-3) is shown below.

Propylene oxide was polymerized with use of (i) polyoxypropylene glycol which was an initiator and which had a number average molecular weight of approximately 4,500 and (ii) a zinc hexacyanocobaltate glyme complex catalyst. Thus obtained was polyoxypropylene which had hydroxy groups at terminals and which had a number average molecular weight of 25,500 and a molecular weight distribution of Mw/Mn=1.32. Next, 1.2 molar equivalents of sodium methoxide with respect to the hydroxy groups of this hydroxy group-terminated polyoxypropylene was added as a 28% methanol solution. The methanol was then removed by vacuum devolatilization. Thereafter, 1.5 molar equivalents of allyl chloride with respect to the hydroxy groups of the hydroxy group-terminated polyoxypropylene was further added to convert the hydroxy groups at the terminals to allyl groups. Then, unreacted allyl chloride was removed by devolatilization under reduced pressure. The obtained unpurified polyoxypropylene was mixed with n-hexane and water, and stirring was carried out. The water was then removed by centrifugal separation. The hexane was devolatilized from the obtained hexane solution under reduced pressure to remove a metal salt in the polymer. In this manner, the polyoxypropylene having the allyl groups at the terminals was obtained. To 500 g of this polymer, 50 µl of a platinum-divinyldisiloxane complex solution (3% by weight of isopropanol solution in terms of platinum) was added. While the obtained solution was stirred, 4.5 g of dimethoxymethylsilane was slowly dropped into the solution. After this mixed solution was reacted at 100°C for 2 hours, unreacted dimethoxymethylsilane was distilled off under reduced pressure. Thus obtained was polyoxypropylene (A-3) which had dimethoxymethylsilyl groups at terminals and which had a number average molecular weight of approximately 26,500. It was found that the polymer (A-3) had 0.7 dimethoxymethylsilyl groups on average at one terminal and 1.4 dimethoxymethylsilyl groups on average in one molecule.

### [Synthesis Example 4]

A synthesis example of the polymer (A-4) is shown below.

Propylene oxide was polymerized with use of (i) an initiator containing, at a weight ratio of 50/50, polyoxypropylene glycol which had a number average molecular weight of approximately 4,500 and polyoxypropylene triol which had a number average molecular weight of approximately 4,500 and (ii) a zinc hexacyanocobaltate glyme complex catalyst. Thus obtained was polyoxypropylene which had hydroxy groups at terminals and which had a number average molecular weight of 19,700 and a molecular weight distribution of Mw/Mn=1.33. Next, 1.2 molar equivalents of sodium methoxide with respect to the hydroxy groups of this hydroxy group-terminated polyoxypropylene was added as a 28% methanol solution. The methanol was then removed by vacuum devolatilization. Thereafter, 1.5 molar equivalents of allyl chloride with respect to the hydroxy groups of the hydroxy group-terminated polyoxypropylene was further added to convert the hydroxy groups at the terminals to allyl groups. Then, unreacted allyl chloride was removed by devolatilization under reduced pressure. The obtained unpurified polyoxypropylene was mixed with n-hexane and water, and stirring was carried out. The water was then removed by centrifugal separation. The hexane was devolatilized from the obtained hexane solution under reduced pressure to remove a metal salt in the polymer. In this manner, the polyoxypropylene having the allyl groups at the terminals was obtained. To 500 g of this polymer, 50 pl of a platinum-divinyldisiloxane complex solution (3% by weight of isopropanol solution in terms of platinum) was added. While the obtained solution was stirred, 6.5 g of dimethoxymethylsilane was slowly dropped into the solution. After this mixed solution was reacted at 100°C for 2 hours, unreacted dimethoxymethylsilane was distilled off under reduced pressure. Thus obtained was polyoxypropylene (A-3) which had dimethoxymethylsilyl groups at terminals and which had a number average molecular weight of approximately 19,900. It was found that the polymer (A-3) had 0.7 dimethoxymethylsilyl groups on average at one terminal and 1.8 dimethoxymethylsilyl groups on average in one molecule.

### [Synthesis Example 5]

A synthesis example of the polymer (A-5) is shown below.

Propylene oxide was polymerized with use of (i) polyoxypropylene glycol which was an initiator and which had a number average molecular weight of approximately 4,800 and (ii) a zinc hexacyanocobaltate glyme complex catalyst. Thus obtained was polyoxypropylene which had hydroxy groups at terminals and which had a number average molecular weight of 27,900 and a molecular weight distribution of Mw/Mn=1.21. Next, 1.0 molar equivalents of sodium methoxide with respect to the hydroxy groups of this hydroxy group-terminated polyoxypropylene was added as a 28% methanol solution. The methanol was then removed by vacuum devolatilization. Thereafter, 1.0 molar equivalents of allyl glycidyl ether with respect to the hydroxy groups of the hydroxy group-terminated polyoxypropylene was added, and a reaction was carried out at 130°C for 2 hours. Then, a methanol solution of 0.28 molar equivalents of sodium methoxide was added, the methanol was removed, and then 1.79 molar equivalents of allyl chloride was further added to convert the hydroxy groups at the terminals to allyl groups. The obtained unpurified polyoxypropylene was mixed with n-hexane and water, and stirring was carried out. The water was then removed by centrifugal separation. The hexane was devolatilized from the obtained hexane solution under reduced pressure to remove a metal salt in the polymer. In this manner, the polyoxypropylene having a plurality of carbon-carbon unsaturated bonds at the terminals was obtained. It was found that the obtained polymer had 2.0 carbon-carbon unsaturated bonds on average introduced to one terminal.

To 500 g of the obtained polyoxypropylene having the plurality of carbon-carbon unsaturated bonds at the terminals, 50 pl of a platinum-divinyldisiloxane complex solution (3% by weight of isopropanol solution in terms of platinum) was added. While the obtained solution was stirred, 9.6 g of dimethoxymethylsilane was slowly dropped into the solution. After this mixed solution was reacted at 100°C for 2 hours, unreacted dimethoxymethylsilane was distilled off under reduced pressure. Thus obtained was polyoxypropylene (A-5) which had a plurality of dimethoxymethylsilyl groups at terminals and which had a number average molecular weight of 28,500. It was found that the polymer (A-5) had 1.7 dimethoxymethylsilyl groups on average at one terminal and 3.4 dimethoxymethylsilyl groups on average in one molecule.

### [Synthesis Example 6]

A synthesis example of the polymer (A-6) is shown below.

The inside of a stainless steel reaction vessel equipped with a stirrer was deoxidized, and then 7.9 g of cuprous bromide, 125 g of n-butyl acrylate, 37 g of ethyl acrylate, and 38 g of stearyl acrylate were introduced. Then, heating and stirring were carried out. Subsequently, 90 g of acetonitrile and 16.4 g of diethyl 2,5-dibromoadipate, which was an initiator, were added, and mixing was carried out. The temperature of the mixed solution was adjusted to approximately 80°C. At this stage, pentamethyldiethylenetriamine (hereinafter, abbreviated to triamine) was added to initiate a polymerization reaction. Thereafter, 502 g of n-butyl acrylate, 146 g of ethyl acrylate, and 152 g of stearyl acrylate were sequentially added to proceed with the polymerization reaction. During the polymerization, triamine was added as appropriate to adjust a polymerization speed. The total amount of triamine used in the polymerization was 1.5 g. While the internal temperature was adjusted to approximately 80°C to approximately 90°C, the polymerization reaction was caused to proceed. At a point in time when a monomer conversion rate (polymerization reaction rate) reached approximately not less than 95%, a volatile component was removed by devolatilization under reduced pressure. A concentrate of a polymer was thus obtained. To the concentrate, 200 g of 1,7-octadiene (hereinafter, abbreviated to diene or octadiene), 360 g of acetonitrile, and 3.2 g of triamine were added. While the internal temperature was adjusted to approximately 80°C to approximately 90°C, heating and stirring were carried out for several hours to react the octadiene with terminals of the polymer. The acetonitrile and unreacted octadiene were removed by devolatilization under reduced pressure. The concentrate of the polymer which had alkenyl groups at the terminals was obtained.

The concentrate was diluted with butyl acetate. Then, a filter aid, an adsorbent (KYOWAAD 700SEN: available from Kyowa Chemical Industry Co., Ltd.), and hydrotalcite (KYOWAAD 500SH: available from Kyowa Chemical Industry Co., Ltd.) were added. An obtained mixture was heated and stirred to approximately 80°C to 100°C, and then a solid component was filtered out. Subsequently, a filtrate was concentrated to obtain a semi-purified product of the polymer. A thermal stabilizer (SUMILIZER GS: available from Sumitomo Chemical Co., Ltd.) and an adsorbent (KYOWAAD 700SEN and KYOWAAD 500SH) were added to the semi-purified product of the polymer. A mixture thus obtained was heated while being subjected to devolatilization under reduced pressure and heating and stirring, and devolatilization under reduced pressure and heating and stirring were carried out at high temperature of approximately 170°C to approximately 200°C for several hours. An adsorbent (KYOWAAD 700SEN and KYOWAAD 500SH) was added, and approximately 10 parts by weight of butyl acetate with respect to the polymer was added. Heating and stirring were carried out at high temperature of approximately 170°C to approximately 200°C for another several hours. A treatment solution thus obtained was further diluted with butyl acetate, and then the adsorbent was filtered out. A filtrate was concentrated to obtain the polymer having alkenyl groups at both terminals.

With 500 g of the polymer obtained by the above method, 13 g of dimethoxymethylsilane (DMS), 4 g of methyl orthoformate (MOF), 5 mg of a platinum catalyst [an isopropanol solution of a bis(1,3-divinyl-1,1,3,3-tetramethyldisiloxane) platinum complex catalyst: hereinafter, referred to as "platinum catalyst"] were mixed, and a mixture thus obtained was heated and stirred at approximately 100°C. After heating and stirring was carried out for approximately 1 hour, a volatile component, such as unreacted DMS, was distilled off under reduced pressure to obtain a (meth)acrylic ester-based copolymer (A-6) having dimethoxymethylsilyl groups at both terminals. The polymer (A-6) had a number average molecular weight of 26,100, a molecular weight distribution of 1.3, and a number of silyl groups introduced per molecule of 1.7.

### [Examples 1 to 12 and Comparative Examples 1 to 3]

The (A) component, the (B) component, and the (C) component or a needle-shaped filler shown in Table 1 were added to a mixing vessel, and mixed at 600 rpm and 25°C for 10 minutes with use of a mechanical stirrer. An emulsion state of a mixture thus obtained was evaluated. Table 1 shows results.

**[Table 1]**

| | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 |
|---|---|---|---|---|---|---|---|---|---|---|---|---|---|---|---|---|
| (A) component | A-1 | 50 | 50 | 30 | 70 | | | | | | 50 | 50 | 50 | 50 | 50 | 50 |
| | A-2 | | | | | 50 | | | | | | | | | | |
| | A-3 | | | | | | 50 | | | | | | | | | |
| | A-4 | | | | | | | 50 | | | | | | | | |
| | A-5 | | | | | | | | 50 | | | | | | | |
| | A-6 | | | | | | | | | 60 | | | | | | |
| (B) component | | 50 | 50 | 70 | 30 | 50 | 50 | 50 | 50 | 40 | 50 | 50 | 50 | 50 | 50 | 50 |
| (C) component | Sumecton SWF | 2 | 4 | 2 | 2 | 4 | 4 | 4 | 4 | 2 | | | | 1 | | |
| | Sumecton SWN | | | | | | | | | | 2 | | | | | |
| | Kunipia-G4 | | | | | | | | | | | 4 | | | | |
| | KUNIGEL MB | | | | | | | | | | | | 15 | | | |
| Other fillers | FTL-100 | | | | | | | | | | | | | | 2 | |
| | WHISCAL A | | | | | | | | | | | | | | | 2 |
| Emulsion state | | Good | Good | Good | Good | Good | Good | Good | Good | Good | Good | Good | Good | Poor | Poor | Poor |

### [Results]

It is found from Table 1 that the emulsion compositions of Examples 1 to 12 can be emulsified uniformly. In contrast, it is found that the emulsion compositions of Comparative Examples 1 to 3 cannot be emulsified and are separated (an emulsion cannot be obtained).

Thus, it was shown that, according to an embodiment of the present invention, it was possible to provide an emulsion composition which made it possible to easily form an emulsion containing a hydrolyzable silyl group-containing polymer.

### Industrial Applicability

It is possible to provide an emulsion composition which makes it possible to easily form an emulsion containing a hydrolyzable silyl group-containing polymer. Therefore, it is possible to suitably use the present emulsion composition in the fields of, for example, cement mortar, and the like.

## Claims

1. An emulsion composition comprising:
(A) at least one of a hydrolyzable silyl group-containing polyoxyalkylene-based polymer (A1) and a hydrolyzable silyl group-containing (meth)acrylic ester-based copolymer (A2);
(B) water; and
(C) a layered filler, wherein
the emulsion composition comprises 1.5 parts by weight to 20 parts by weight of the (C) component with respect to a total of 100 parts by weight of the (A) component and the (B) component.

2. The emulsion composition as set forth in claim 1, wherein the (C) component is a layered silicate.

3. The emulsion composition as set forth in claim 1 or 2, wherein a weight ratio between the (A) component and the (B) component is 20:80 to 80:20.

4. The emulsion composition as set forth in any one of claims 1 through 3, wherein the (A) component is the hydrolyzable silyl group-containing polyoxyalkylene-based polymer (A1).

5. A method for producing an emulsion composition, comprising a stirring step of mixing and stirring:
(A) at least one of a hydrolyzable silyl group-containing polyoxyalkylene-based polymer (A1) and a hydrolyzable silyl group-containing (meth)acrylic ester-based copolymer (A2);
(B) water; and
(C) a layered filler, wherein
1.5 parts by weight to 20 parts by weight of the (C) component is mixed and stirred with a total of 100 parts by weight of the (A) component and the (B) component.

6. The method as set forth in claim 5, wherein, in the stirring step, a rotation speed of a stirring device is 200 rpm to 1800 rpm, and a stirring time is 1 minute to 60 minutes.

7. The method as set forth in claim 5, wherein, in the stirring step, a stirring temperature is 5°C to 80°C.

8. The method as set forth in claim 5, wherein the (C) component is a layered silicate.

9. The method as set forth in claim 5, wherein a weight ratio between the (A) component and the (B) component is 20:80 to 80:20.

10. The method as set forth in claim 5 or 6, wherein the (A) component is the hydrolyzable silyl group-containing polyoxyalkylene-based polymer (A1).
